# EUROPÄISCHE PATENTANMELDUNG

(11) **EP 1 047 281 A2**
(43) Veröffentlichungstag der Anmeldung: **25.10.2000**
(21) Anmeldenummer: 00440105.5
(22) Anmeldetag: 14.04.2000
(51) Int. Cl.: H04Q 11/04, H04L 12/64, H04L 29/06

(54) **Verfahren und Vorrichtung zum Bereitstellen von Internet-Diensten mit hoher Qualität**

(30) Priorität: 19.04.1999 DE 19917666
(71) Anmelder: ALCATEL, 75008 Paris (FR)
(72) Erfinder: Turban, Karl-albert, D-71229 Leonberg-Höfingen (DE)
(74) Vertreter: Rausch, Gabriele, Dr.

(57) **Zusammenfassung**

Ein Verfahren zum Übertragen von Internet-Informationen zwischen mindestens einigen aus einer Mehrzahl von physikalischen Knoten eines Netzwerks, ist gekennzeichnet durch folgende Merkmale:
- bei mindestens einigen durch Benutzereinrichtungen (Benutzer-Telekommunikationseinrichtungen) gebildeten physikalischen Knoten wird jeweils mindestens ein logischer Knoten für nicht-zeitkritische Information (= für nicht-zeitkritischen Daten-Verkehr) und mindestens ein logischer Knoten für zeitkritische Information eingerichtet,
- für jede der beiden Arten der zu übertragenden Information werden geeignete Datenwege bereitgestellt,
und je nach den Erfordernissen der zu übertragenden Information wird die Information auf dem für diese Erfordernisse geeigneten Datenweg übertragen.

Von Vorteil ist, daß ohne Eingriff in das Internetprotokoll mit geringem Aufwand Internetdienste bereitgestellt werden können, diedie für eine zeitkritische Datenübertragung erforderliche gute Qualität haben.

## Beschreibung

Die Erfindung betrifft ein Verfahren zum Übertragen von Internet-Informationen zwischen mindestens einigen aus einer Mehrzahl von physikalischen Knoten eines Netzwerks. Beim bisher üblichen Internet-Verkehr werden die Daten nach dem Verfahren "Speichern und Weiterleiten" ("Store and Foreward") übertragen. Es werden also zunächst in einem Internet-Router die einzelnen Datenpakete empfangen, dann wird das Adressfeld ausgewertet und anschließend wird das Paket weitergeleitet. Bei der Architektur des Internet ist eine Signalisierung im Sinne von Kommunikations-Protokollen, insbesondere hinsichtlich der Art der zu übertragenden Nachricht, nicht vorgesehen. IP-Datenpakete enthalten jedoch Kennungen für Priorität und Servicetyp und neuerdings auch ein Flag das unter mehreren Möglichkeiten preisgünstige Verbindungen anfordert. Es stehen aber nur solche Verbindungen zwischen Internetknoten zur Verfügung die bereits eingerichtet sind.

Basierend auf der Konfiguration der IP-Knoten und der Verbindungsleitungen dazwischen lernen die Internet-Knoten die Konfiguration ihrer Umgebung. Dadurch werden die Routing-Tabellen erstellt und aktualisiert. Fällt ein Knoten oder eine Übertragungsleitung aus, werden automatisch neue Verbindungen gesucht und gefunden. Alle Verbindungen zwischen Benutzern untereinander und zwischen Benutzern und Datenanbietern (Contentprovidern), die über ein Knotenpaar geroutet werden, teilen sich die Bandbreite zwischen den Knoten dynamisch.

Dabei ist für den Benutzer vorteilhaft, daß die einzelnen Verbindungen geringe Telekommunikationskosten verursachen, und daß für alle IP-Dienste, die ein Benutzer mit einem bestimmten anderen Benutzer abwickeln will, dieselbe Adresse des anderen Benutzers verwendet werden kann.

Nachteilig ist,
- daß die Anzahl der Internet-Knoten zwischen zwei Benutzern oder einem Benutzer und einem Datenlieferanten (Contentprovider) unbekannt ist,
- daß die Datenübertragungsqualität (Geschwindigkeit, Fehlerunanfälligkeit) der Knoten lastabhängig ist und sich innerhalb kürzester Zeit stark ändern kann,
- daß Sprach- und Bildübertragung eine variable Verzögerung erfahren, wodurch die Qualität dieser Dienste stark beeinträchtigt wird, und schließlich
- daß die Standards für die Bewegtbild- und Sprachübertragung noch nicht stabil sind, weil sie häufig geändert werden.

Demgegenüber bieten öffentliche Telekommunikationsnetze einerseits
- geschaltete Verbindungen mit bekannten und nachprüfbaren Qualitätsstandards, andererseits
- ATM-Übertragung mit garantierter Qualität und Leistung (Performance).

Diese Netze bieten außerdem eine Anzahl zusätzlicher Leistungsmerkmale wie weltweite Verfügbarkeit, Übertragung basierend auf internationalen Standards und bei Verwendung von ATM-Übertragung auch mit variabler Bitrate.

Die Verwendung beispielsweise solcher öffentlicher Telekommunikationsnetze durch einen Internetbenutzer dann, wenn er zeitkritische Daten übertragen will, würde jedoch die Handhabung und Einrichtung einer solchen Datenübertragungsverbindung erschweren und wäre nicht vergleichbar mit der für den Benutzer extrem einfachen Datenübertragung über das Internet.

Der Erfindung liegt die Aufgabe zugrunde, ein Verfahren und eine Vorrichtung anzugeben, durch die mit geringstmöglichem Aufwand ohne Eingriff in das Internetprotokoll Internetdienste bereitgestellt werden können, die eine für zeitkritische Datenübertragung erforderliche gute Qualität haben.

Diese Aufgabe wird bei dem Verfahren gemäß dem kennzeichnenden Teil des Anspruches 1 dadurch gelöst, daß:
- bei mindestens einigen durch Benutzereinrichtungen (Benutzer-Telekommunikationseinrichtungen) gebildeten physikalischen Knoten wird jeweils mindestens ein logischer Knoten für nicht-zeitkritische Information (= für nicht-zeitkritischen Daten-Verkehr) und mindestens ein logischer Knoten für zeitkritische Information eingerichtet,
- für jede der beiden Arten der zu übertragenden Information werden geeignete Datenwege bereitgestellt,
und je nach den Erfordernissen der zu übertragenden Information wird die Information auf dem für diese Erfordernisse geeigneten Datenweg übertragen.

Auf diese Weise wird bewirkt, daß je zwei benachbarte physikalische Knoten ein "physisches Knotenpaar" bilden,
- daß in jedem physischen Knoten mehrere logische Knoten existieren und dadurch logische Knotenpaare entstehen,
- das "physiche Knotenpaar" sich die vorhandene garantierte Übertragungskapazität zwischen den "logischen Knotenpaaren" aufteilt.

Durch die Konfiguration der logischen Knotenpaare entstehen logische Netze, die das vorhandene Internetprotokoll ohne Modifikation und ohne Einschränkung nutzen können.

Ein physikalischer oder physischer Knoten ist ein technisches körperliches Gerät, z.B. die Telekommunikationseinrichtung eines Internetbenutzers. Mehrere logische (andere Ausdrucksweise: abstrakte) Knoten werden in der Einrichtung durch deren Steuerung (z.B. Computerprogramm) gebildet, so daß sich die Einrichtung unterschiedlich verhält, je nach dem, ob zeitkritische Daten oder nicht-zeitkritische Daten übertragen werden sollen.

Die entsprechende Vorrichtung, die die Aufgabe löst, ist gemäß dem Anspruch 10 ein Internet-Knoten, gekennzeichnet durch folgende Merkmale:
- er weist Einrichtungen zum Verbinden in unterschiedlichen Betriebsarten in Abhängigkeit davon, ob die zu übertragende Information zeitkritisch ist oder nicht, auf;
- er weist eine Verarbeitungseinheit (processing unit, CPU) zum Erzeugen logischer Knoten für potentielle Verbindungen auf.

Hierbei werden vorteilhaft
- einzelne "virtuelle Verbindungen" (virtual channel) (siehe ETSI Spezifikation Begriff "virtual channel" : Transmission and Multiplexing (TM);Terms and definitions in transport networks; Part 1: Core networks) einem logischen Knoten zugewiesen und erlauben einen garantierten Datendurchsatz,
- die Anzahl benutzter virtueller Verbindungen während der Betriebsdauer des logischen Knotens kann kann variieren,
- die virtuelle Verbindung kann entweder Ende-zu-Ende geschaltet werden oder ersetzt einen Teil der Internetverbindung.

Ein Benutzer des Internet, der in der herkömmlichen Weise nicht-zeitkritischen Datenverkehr über das Internet genau in der bisher üblichen Weise abwickeln kann, erhält dann, wenn seine technischen Einrichtungen erfindungsgemäß ausgestaltet sind, zusätzlich die Möglichkeit, zeitkritischen Datenverkehr über solche Datenwege zu leiten, die vom üblichen nicht-zeitkritischen Datenverkehr normalerweise nicht benutzt werden und für zeitkritischen Datenverkehr reserviert und für diesen gut geeignet sind. Dabei kommen Ausführungsformen der Erfindung ohne Änderungen der ISP-Netzknoten (oder anderer, nur zur Datenweiterleitung dienender Knoten, wie Router) aus. Die Wahl, welchen Datenweg die abzusendende Nachricht nimmt, kann im allereinfachsten Fall vom Benutzer von Hand vorher eingestellt werden (Auswahl des Proxies, Gateways, serviceabhängig abgestimmtes Benutzerprofil etc.). Ein anderer Benutzer, mit dem ein erster Benutzer Daten austauscht, ist dann unter einer herkömmlichen Internet-Adresse für herkömmlichen Internet-Verkehr erreichbar, und unter einer anderen, für den zeitkritischen Datenverkehr vorgesehenen Adresse für den zeitkritischen Verkehr. Die technischen Einrichtungen bei dem die Verbindung aufbauenden Benutzer sind vorteilhaft so ausgebildet, daß sie anhand der gewählten Adressnummer den jeweils richtigen Datenweg, also z.B. den für zeitkritischen Verkehr, auswählen. Bei Ausführungsformen der Erfindung ist das Programm, das die Verbindung zu einem anderen Benutzer herstellt, derart ausgebildet, daß es je nach Erfordernis die Wahl eines Datenwegs der beiden geschilderten unterschiedlichen Arten auswählt. Es ist außerdem vorteilhaft, daß nur einer der Benutzer die Trennung in logische Knoten (das heißt, das Absenden der Nachricht mittels des für diese geeigneten logischen Knotens) vornehmen muß, um sicher zu stellen, daß die bessere Verbindung verwendet wird.

Umgekehrt erkennen die technischen Einrichtungen im Empfangsfall, über welche der Verbindungen die Daten eintreffen (Verbindung für nicht-zeitkritische Daten oder für zeitkritische Daten) und es wird dadurch ermöglicht, auch im lokalen Knoten die Daten entsprechend den jeweiligen Anforderungen weiterzuverarbeiten, nämlich herkömmlich mit Einreihen am Ende der Warteschlange bzw. bevorzugt und rasch.

Das letztgenannte Merkmal ist auch wichtig für zwischen Benutzern angeordnete Netzknoten, falls ein oder mehrere der herkömmlichen Internet-Netzknoten durch zusätzliche technische Einrichtungen auch zur Übertragung zeitkritischer Daten ausgebildet sind. Diese Netzknoten schalten dann Datenverkehr, der auf einem für zeitkritische Daten vorgesehenen Kanal eintrifft, mit höchster Priorität an einen in Richtung zum Ziel abgehenden Kanal ebenfalls für zeitkritischen Datenverkehr weiter.

Das Internet überträgt Nachrichten als Datenpakete. Jedes Datenpaket trägt eine eindeutige Adresse, die eine Weiterleitung dieses Datenpakets an das Ziel erlaubt. Die Übertragung erfolgt asynchron. D.h. die Übertragung für die einzelnen Pakete einer einzelnen Nachricht erfolgt nicht in einem strengen Zeittakt. Beim Internet-Verkehr können Zeitverzögerungen (die über die durch die Entfernung zwischen Absender und Empfänger ohnehin unvermeidliche Zeitverzögerung (Propagation delay) hinausgehen,) auftreten, die stark schwanken: Die Schwankungen der Übertragungszeit liegen im günstigen Fall im Bereich von wenigen Sekunden im ungünstigen Fall bis zu mehrere Minuten. Die Verzögerungen beim Internet-Verkehr sind deswegen relativ groß, weil ein zu einem Netzknoten gesendetes Datenpaket dort zuerst gequeued wird (queuen: einsortieren in eine Warteschlange), dann seine Adresse ausgewertet wird, und schließlich das Datenpaket in Abhängigkeit von der Adresse weitergeschickt wird, im Falle daß die abgehende Verbindung eines Knotens belegt ist, warten muß und weil das Datenpaket möglicherweise viele Netzknoten durchlaufen muß in denen das Delay akkumuliert.

Es ist eine weitere Form der asynchronen Datenübertragung als ATM spezifiziert (ATM = Asynchronous Transfer Mode). ATM benutzt Datenpakete (Zellen) fester Länge (5 Byte Header, 48 Byte payload) und reserviert für einzelne virtuelle Verbindungen die Übertragungskapazität. ATM benutzt Kommunikationsprotokolle zum Aufbau und Abbau der virtuellen Verbindungen. ATM wurde bei ETSI, ITU und ATM Forum spezifiziert. ATM kann eine Ende-zu-Ende Performance garantieren.

Auch ATM verwendet Datenpakete mit einer Adresseninformation. Die ATM Adresse ist nicht einem Benutzerknoten zugeordnet, sondern kann im Gegensatz zum Internet mehrfach wiederverwendet werden. Außerdem enthält der ATM Header nur die Zieladresse und nicht wie im Fall des IP Headers Absender und Zieladresse.

Bei den unten beschriebenen Beispielen wird als Übertragungsmodus für die zeitkritischen Daten stets von ATM gesprochen. Die ATM Zellen können z.B. über SDH oder jede andere geeignete Übertragungstechnik übertragen werden. Die Beschreibung soll aber so verstanden werden, daß anstatt von ATM bei Bedarf auch eine andere, für den vorgesehenen Zweck geeignete oder anpassbare Art der Übertragung mit garantierter Performance verwendet werden kann, ohne den Rahmen der Erfindung zu verlassen, z.B. eine synchrone Übertragung der erforderlichen hohen Qualität. ATM ist demgemäß lediglich ein Beispiel, wenn auch eines, das derzeit bevorzugt ist und als die am einfachsten zu realisierende Möglichkeit angesehen wird. So könnte man z.B. im Bereich der Zugangsnetze auch ADSL oder SDSL Technologie zum Transport der ATM Zellen verwenden oder direkt IP Pakete via ADSL oder SDSL zu mehreren logischen Access Knoten übertragen.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:
Fig. 1 ein erfindungsgemäßes Netzwerk, bei dem nur Benutzereinrichtungen zur Auswahl von unterschiedlichen Datenwegen für zeitkritische und nicht-zeitkritische Information ausgebildet sind,
Fig. 2 schematisch einen Rechner einer erfindungsgemäßen Benutzereinrichtung.
Fig. 3 ein erfindungsgemäßes Netzwerk, bei dem zusätzlich ein Knoten, der keine Benutzereinrichtung sondern die Einrichtung eines ISP oder Contentproviders ist, zur Auswahl von unterschiedlichen Datenwegen für zeitkritische und nicht-zeitkritische Information ausgebildet ist.

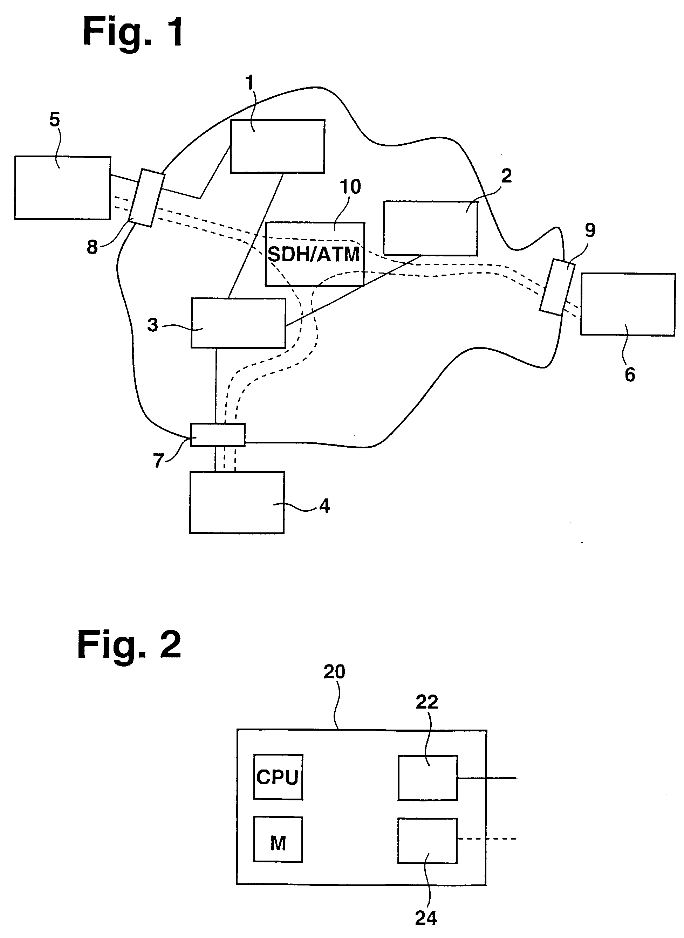

Fig. 1 zeigt ein Beispiel einer erfindungsgemäßen Netzwerkstruktur. Das Netzwerk weist Knoten 1, 2 und 3 auf, bei denen es sich um ISP-Knoten (Internet-Service-Provider-Knoten, Internet-Diensteanbieter-Knoten) handelt. Diese sind herkömmliche Internet-Knoten mit der geschilderten Verzögerung beim Weiterleiten von Daten. Außerdem weist das Netzwerk Benutzer-Einrichtungen (lokale Knoten) 4, 5 und 6 für Daten, Sprache, Video, Audio usw. auf, und diese zuletzt genannten Knoten sind im Beispiel jeweils einem Benutzer des Netzwerks zugeordnet und verschaffen dem Benutzer den Zugang zum Internet (genauer: zum ersten ISP-Knoten des Internet-Providers des Benutzers).

Das Routing (Durchschaltung) der Datendienste zwischen den Knoten hat maßgeblichen Einfluß auf die Qualität der Dienste. So gilt
- je kleiner die Anzahl der IP-Knoten zwischen den Benutzern ist, desto geringer ist die Warteschlangenverzögerung (Queuing-Delay) und desto geringer ist auch die Varianz der Warteschlangenverzögerung.
- je kleiner die Anzahl der IP-Knoten (=ISP-Knoten) zwischen den Benutzern ist, desto geringer ist die Übertragungsverzögerung (Transmission Delay),
- je kleiner die Anzahl der IP-Knoten zwischen den Benutzern ist, desto geringer ist die Kollisionswahrscheinlichkeit von Paketen (Datenverlust, möglicherweise kompensierbar durch erneute Übertragung),

Daher ist es vorteilhaft, die Anzahl der IP-Knoten in einer Verbindung (d.h. die Anzahl der Sprünge oder Hops) zu minimieren. Besonders vorteilhaft ist es,
- wenn die Anzahl der Hops über das öffentliche Netz auf 1 reduziert wird,
- die Kompatibilität mit dem IP-Protokoll ohne Einschränkung gewahrt wird.

Außerdem sollen die IP-Knoten über mehrere logische externe Verbindungen mit dem öffentlichen Netz kommunizieren können, um gleichzeitig unterschiedliche Datenquellen (Contentprovider) nutzen bzw mit anderen Benutzern kommunizieren zu können. Z.B. Herunterladen einer Datei oder Applikation während ein Bildtelephonat geführt wird.

Die soeben geschilderte Reduzierung der Anzahl der Hops für gewisse Arten von Datenverkehr über das Internet vermeidet eine Umstrukturierung des Internet und läßt sich daher schnell durchsetzen. Die genannte Reduzierung der Hops durch zusätzliche Maßnahmen bei den Teilnehmereinrichtungen ist leicht zu erreichen, wie Fig. 1 zeigt.

In Fig. 1 sind am Rande des Netzwerkes Geräte 7, 8 und 9 eingezeichnet, die im Beispiel ADSL-Geräte sind, stattdessen aber auch SDSL Geräte sein könnten. Diese Geräte stehen mit den lokalen Knoten 4, 5, 6 in Verbindung. In Fig. 1 ist ein weiterer Knoten 10 eingezeichnet, der als SDH/ATM-Knoten bezeichnet ist. Es kann sich hierbei bei kleineren Netzwerken um einen einzigen ATM-Knoten (Vermittlungsstelle für ATM-Verkehr) handeln, bei größeren Netzwerken steht dieser Knoten 10 stellvertretend für ein ATM-Netzwerk, das mehrere ATM-Knoten (mehrere ATM-Vermittlungsstellen) enthalten kann.

Im Ausführungsbeispiel wird zwischen den Knoten 4, 5 und 6 und dem ATM-Netzwerk 10 ADSL-Technologie verwendet. ADSL-Technologie erlaubt ATM-Verkehr mit hoher Bitrate zu übertragen und stellt somit auch die notwendige Flexibilität im Routing zur Verfügung, d.h., wegen der hohen Übertragungskapazität kann, solange diese nicht vollständig ausgelastet ist, noch weiterer Datenverkehr von den einzelnen Kanälen übernommen werden.

In Fig. 1 sind mit gestrichelten Linien ATM-Verbindungen für zeitkritischen Verkehr dargestellt, mit durchgezogenen Linien sind Punkt-zu-Punkt-Verbindungen zum ISP für nicht-zeitkritischen Verkehr (herkömmlicher Internetverkehr) dargestellt. Der Verkehr entlang der gestrichelten Linien berührt im Beispiel der Fig. 1 die ISP-Knoten 1, 2 und 3 nicht.

Für die Definition der Nachbarschaft der einzelnen Knoten der Fig. 1 gelten die Angaben der Tabelle 1.

**Tabelle 1 :**

| Nachbarschaftstabelle für den Fall der IP Verbindungen und der IP über ATM Verbindungen | | |
|---|---|---|
| Knoten | Nachbarn via IP Verbindungen | Nachbarn via ATM |
| 1 | 5, 3 | 2, 3, 4, 5, 6 |
| 2 | 3,6 | 1,3,4,5,6 |
| 3 | 1,2,4 | 1,2,4,5,6 |
| 4 | 3 | 1,2,3,5,6 |
| 5 | 1 | 1,2,3,4,6 |
| 6 | 2 | 1, 2, 3, 4, 5 |

Die Knoten 1 und 2 sowie 2 und 3 sind jeweils paarweise mit Punkt-zu-Punkt-Verbindungen (durchgezogene Linien) verbunden. (Der Knoten 1 ist mit dem Knoten 2 nicht durch eine derartige Verbindung verbunden.) Somit ergeben sich als Routing-Tabelle unter ausschließlicher Verwendung der als durchgehende Linie gezeichneten permanenten Datenverbindungen für IP-Datenverkehr einerseits und der für ATM-Datenverkehr vorgesehenen, als gestrichelte Linien dargestellten Datenverbindungen andererseits die Verhältnisse, wie sie in Tabelle 2 angegeben sind.

**Tabelle 2 :**

| Vergleich der Routing Tabellen | | | | | |
|---|---|---|---|---|---|
| Von | nach | via IP Verbindungen | | via IP über ATM | |
| | | Weg | # Hops | Weg | # Hops |
| 4 | 5 | 4-3-1-5 | 3 | 4-5 | 1 |
| 4 | 6 | 4-3-2-6 | 3 | 4-6 | 1 |
| 5 | 6 | 5-1-3-2-6 | 4 | 5-6 | 1 |
| 5 | 4 | 5-1-3-4 | 3 | 5-4 | 1 |
| 6 | 5 | 6-2-3-1-5 | 4 | 6-5 | 1 |
| 6 | 4 | 6-2-3-4 | 3 | 6-4 | 1 |

Während über IP-Verbindungen die Anzahl (#) der "Hops", d.h. "Sprünge" zum jeweils folgenden Knoten, 3 oder 4 beträgt, ist die Verbindung zwischen den Knoten 4 bis 6 unter Umgehung des herkömmlichen Internet, nämlich unter Verwendung von ATM mit jeweils nur einem einzigen Hop möglich. Diese Verkürzung witrd dadurch ermöglicht, daß der lokale Knoten in seiner eigenen Routingtabelle die kürzeste Verbindung wählt oder über einen Proxi Zugriff die notwendige Information über eine Direktverbindung abfragt (diese Routingtabelle kann konfiguriert werden und existierte in der Vergangenheit ausschließlich für das lokale Netz, heute wird sie durch einen Proxi-Zugriff ersetzt). Diese Routingtabelle wird erfindungsgemäß um permanente, semipermanente und signalisierte ATM Verbindungen oder anderen Zugriff z.B. über ISP für priorisierten Verkehr oder ISDN oder ADSL etc. erweitert.

Man erkennt in Tabelle 1, daß die Verknüpfung der Knoten via ATM eine sehr viel mächtigere Menge der Nachbarschaftsbeziehungen erzeugt, und Tabelle 2 zeigt, daß im Beispiel die Anzahl der Hops zwischen den Knoten das theoretische Minimum erreicht.

Um diese Vorteile nutzen zu können, sind die Rechnerknoten der Benutzereinrichtungen erfindungsgemäß im Vergleich zu den bisher üblichen Knoten bei den Benutzern modifiziert.

Diese Modifikationen betreffen:
- jedem physikalischen Benutzer-Knoten (= Benutzereinrichtung) sind mindestens zwei Adressen zugewiesen (und zwar mindestens eine herkömmliche IP-Adresse für nicht-zeitkritischen Datenverkehr und mindestens eine andere Adresse für zeitkritischen Datenverkehr);
- die Routing-Tabelle für die permaneneten ATM-Verbindungen wird lokal statisch eingerichtet, d.h., daß diese Verbindungen zwischen den einzelnen Benutzern von Anfang an geplant werden und bei Bedarf durchgeschaltet werden, sofern es sich nicht um Verbindungen handelt, die ohnehin bereits bestehen.

Der Zweck dieser Maßnahme besteht darin, daß durch entsprechende Planung der zu erwartende Datenverkehr berücksichtigt werden kann und eine geringstmögliche Verzögerungszeit und geringstmögliche Schwankungen der Übertragungszeit sicher gestellt werden können. Auch wird durch diese Maßnahme verhindert, daß bei dem Entstehen eines Bedarfs einer solchen Verbindung der Datenverkehr möglicherweise auf einen Kanal geleitet wird, der bereits sehr stark ausgelastet ist, wodurch wiederum, beispielsweise infolge steigender Kollisionsgefahr, Übertragungsverzögerungen oder Datenverlust eintreten könnten.

Synchrone Übertragung gewährleistet geringstmögliche Verzögerungen. Man erzielt die erfindungsgemäßen Vorteile aber auch bei asynchroner Übertragung, sofern für die Verbindung Übertragungskapazität reserviert wird. Die Reservierung der Übertragungskapazität wird vom ATM Netzwerk gewährleistet.

Es kann zweckmäßig sein, den erfindungsgemäß mittels ATM übertragenen Datenverkehr über größere Entfernungen über SDH (Synchronous Digital Hierarchy), also auf synchronem Wege zu übertragen.

Fig. 2 zeigt schematisch einen Rechner 20 einer Benutzereinrichtung, der sich körperlich von einem herkömmlichen Rechner für die Kommunikation mit dem Internet dadurch unterscheidet, daß er mehr als eine einzige Netzwerkkarte enthält, nämlich eine Netzwerkkarte 22, wie bisher, für das Internet, auf der aber lediglich nicht-zeitkritische Daten unter Steuerung durch das Computerprogramm ausgegeben bzw. empfangen werden, und eine zweite Netzwerkkarte 24, auf die das Computerprogramm diejenigen Daten leitet, die zeitkritisch sind. Im Beispiel sind die genannten Netzwerkkarten ADSL oder ISDN-Karten, die die Verbindung des Computers mit dem öffentlichen Telefonnetz und über dieses mit dem Serviceprovider für das Internet (über die Netzwerkkarte 22 für nicht-zeitkritischen Verkehr) bzw. über die Netzwerkkarte 24 für zeitkritischen Verkehr zu dem ATM-Knoten 10 herstellen. Der Rechner 20 enthält einen Prozessor (CPU) und Massenspeicher sowie Arbeitsspeicher (M). Im Speicher M sind auch Daten und ein Programm zur Bereitstellung eines Proxi-Service enthalten, der normale Adressenumsetzung (wie beim herkömmlichen Internet bekannt) und die Umsetzung von Internetadressen in permanente virtuelle Verbindungen und in Information für Wählverbindungen unterstützt, was für die Übertragung zeitkritischer Daten nützlich ist.

Das ATM-Netzwerk kann eine Vielzahl von ATM-Netzwerkknoten aufweisen. Das ATM - Netzwerk wird vom Benutzer als Unität gesehen. Aus dem Blickwinkel des Internetbenutzers bleibt die Granularität des ATM-Netzwerks verborgen, hingegen ist die Granularität des Internet erfahrbar (trace, ping, etc.). Das ATM Netzwerk erscheint aus Sicht des Benutzers wie ein einziger Knoten 10, weil unabhängig von der Anzahl der ATM Knoten aus Internetbenutzersicht keine störende zusätzliche Verzögerung gegenüber dem Vorhandensein nur einer einzigen ATM-Vermittlungsstelle wahrgenommen wird.

Es wird auf diese Weise dem herkömmlichen Internet ein weiteres logisches Internet überlagert, wodurch die Konstruktion und Programmierung der bestehenden Internetknoten und der diese betreibenden Programme selbst nicht beeinflußt werden muß. Vielmehr wird der zeitkritische Verkehr im Beispiel dadurch von den Internet-Knoten des herkömmlichen Internet ferngehalten, sodaß bereits beim Benutzer (Knoten 4 bis 6) der zeitkritische Verkehr direkt an das ATM-Netzwerk bzw. den ATM-Knoten weitergeleitet wird.

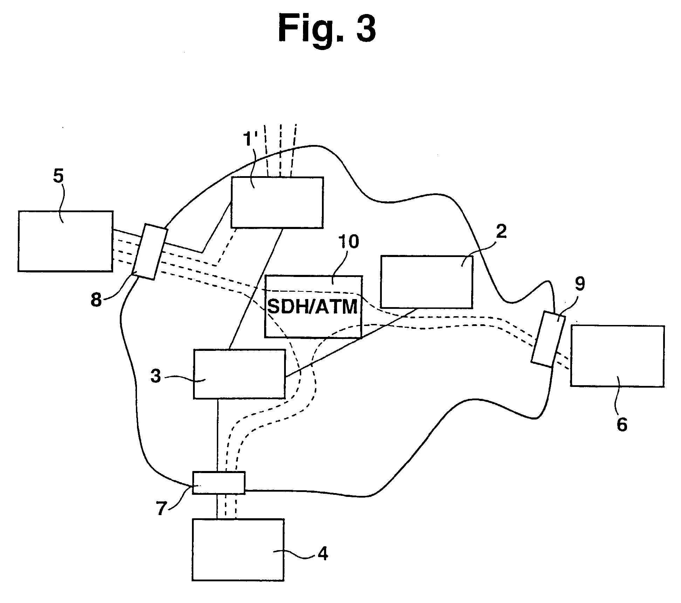

Zur Erfindung sollen aber auch solche Verfahren und Netzwerke gehören, bei denen mindestens ein herkömmlicher Internetknoten zur zusätzlichen Übertragung zeitkritischer Nachrichten, im Beispiel von ATM-Daten ausgebildet ist. Bei dem in Fig. 3 gezeigten Netz ist zusätzlich der dem Knoten 1 der Fig. 1 entspechende Knoten 1' in erfindungsgemäßer Weise umgestaltet, und zwar derart, daß ein Benutzer an diesen Internetknoten via zusätzlicher virtueller ATM Verbindung zeitkritische Nachrichten senden kann, daß dieser Internetknoten diese zeitkritischen Nachrichten an einem separaten logischen Eingang (logisch getrennt von dem nicht-zeitkritischen Datenverkehr) empfängt, mit hoher Priorität, also mit geringstmöglicher Verzögerung, weiter verarbeitet und anschließend auf einem für zeitkritischen Verkehr reservierten ATM-Kanal weitersendet. Dieses Weitersenden erfolgt bei einer Ausführungsform der Erfindung zu einem ATM-Knoten, bei einer anderen Ausführungsform der Erfindung sendet der genannte Internetknoten diese ATM-Nachricht direkt an einen anderen Benutzer; im letztgenannten Fall (möglicherweise auch im erstgenannten Fall) bildet dieser Internet-Knoten gleichzeitig zu seiner herkömmlichen Internetfunktion die Funktion eines ATM-Knotens oder einer ATM-Vermittlungsstelle. Ein solcher für nicht-zeitkritischen Internetverkehr und für zeitkritischen Verkehr geeigneter Knoten kann auch in der Weise gebildet werden, daß einer bestehenden ATM-Vermittlungsstelle die Funktionalität eines herkömmlichen Internetknotens hinzugefügt wird und eine Einbindung ins Internet erfolgt.

Die Geräte 7, 8 und 9 können in ADSL oder SDSL Technologie ausgeführt sein.. Sie können in Form von Steckkarten in die Computer der Teilnehmereinrichtungen eingebaut sein oder extern an den Computer angeschlossen werden und leiten ATM-Verkehr auf für diesen vorgesehene Datenkanäle. Diese Geräte erlauben eine Datenrate von bis zu 8 MBit pro Sekunde. Ohne solche ADSL-Geräte beträgt die ATM-Datenrate bei dem in Deutschland eingerichteten ISDN-Netz etwa 64 kBit pro Sekunde.

## Patentansprüche

1. Verfahren zum Übertragen von Internet-Informationen zwischen mindestens einigen aus einer Mehrzahl von physikalischen Knoten eines Netzwerks, gekennzeichnet durch folgende Merkmale:
• bei mindestens einigen durch Benutzereinrichtungen (Benutzer-Telekommunikationseinrichtungen) gebildeten physikalischen Knoten wird jeweils mindestens ein logischer Knoten für nicht-zeitkritische Information (= für nicht-zeitkritischen Daten-Verkehr) und mindestens ein logischer Knoten für zeitkritische Information eingerichtet,
• für jede der beiden Arten der zu übertragenden Information werden geeignete Datenwege bereitgestellt,
und je nach den Erfordernissen der zu übertragenden Information wird die Information auf dem für diese Erfordernisse geeigneten Datenweg übertragen.

2. Verfahren nach Anspruch 1 dadurch gekennzeichnet, daß eine lokale Routing Tabelle verwendet wird,
• die neben dem "normalen" Intenetzugang auch permanenete virtuelle Verbindungen unterstützt und /oder
• Wählverbindungen unterstützt

3. Verfahren nach Anspruch 1 oder 2, dadurch gekennzeichnet, daß ein Proxi Service verwendet wird,
• der neben der "normalen" Adressumsetzung auch die Umsetzung von Internetadressen in permanenete virtuelle Verbindungen unterstützt und / oder
• die Umsetzung in Information für Wählverbindungen unterstützt

4. Verfahren nach einem der vorhergehenden Ansprüche, dadurch gekennzeichnet,
• daß auf für zeitkritische Information bestimmten Datenwegen zeitkritische Information priorisiert übertragen wird und
• daß nur so viel Information zur Übertragung zugelassen wird wie verlustfrei und unter Einhalten der zulässigen Verzögerung übertragen werden kann.

5. Verfahren nach einem der vorhergehenden Ansprüche, dadurch gekennzeichnet, daß unterschiedlichen logischen Knoten desselben physikalischen Knotens unterschiedliche Adressnummern zugeordnet werden.

6. Verfahren nach einem der vorhergehenden Ansprüche, dadurch gekennzeichnet, daß für zeitkritische Information ATM zur Übertragung verwendet wird.

7. Verfahren nach Anspruch 6, dadurch gekennzeichnet, daß ADSL verwendet wird.

8. Verfahren nach einem der vorhergehenden Ansprüche, dadurch gekennzeichnet, daß für zeitkritische Information ein oder mehrere ISDN B-Kanäle verwendet werden.

9. Verfahren nach einem der vorhergehenden Ansprüche, dadurch gekennzeichnet, daß für zeitkritische Information einê Modemverbindung verwendet wird.

10. Internet-Knoten, gekennzeichnet durch folgende Merkmale:
• er weist Einrichtungen zum Verbinden in unterschiedlichen Betriebsarten in Abhängigkeit davon, ob die zu übertragende Information zeitkritisch ist oder nicht, auf;
• er weist eine Verarbeitungseinheit (processing unit, CPU) zum Erzeugen logischer Knoten für potentielle Verbindungen auf.

11. Internet-Knoten nach Anspruch 10, dadurch gekennzeichnet,
• daß er eine Einrichtung zum Resourcen-Management aufweist.
• daß das Resourcen Management Verbindungen für zeitkritischen Verkehr überwacht und nicht überlasten lässt
• daß das Resourcen Management nach Bedarf Resourcen allokiert oder freigibt.

12. Internet-Knoten nach Anspruch 10 oder 11, dadurch gekennzeichnet, daß er bei einer Benutzereinrichtung eingerichtet ist.

13. Internet-Knoten nach Anspruch 10 oder 11, dadurch gekennzeichnet, daß er bei einem ISP eingerichtet ist.

14. Netzwerk, gekennzeichnet durch ein Verfahren nach einem der Ansprüche 1 bis 9 und/oder dadurch gekennzeichnet, daß es mindestens einen Knoten nach einem der Ansprüche 10 bis 13 aufweist.
